# EUROPEAN PATENT APPLICATION

(11) **EP 2 455 311 A1**
(43) Date of publication of application: **23.05.2012**
(21) Application number: 10192078.3
(22) Date of filing: 22.11.2010
(51) Int. Cl.: B65G 67/20

(54) **Method for loading and unloading an elongated container**

(71) Applicant: Beheer 141 B.V., 2681 TW Monster (NL)
(72) Inventor: Van Vliet, Nick Martinas Johannes, 2681 TW, Monster (NL)
(74) Representative: Hooiveld, Arjen Jan Winfried

(57) **Abstract**

A method for loading and unloading an elongated container (1), wherein
- the container (1) is conveyed to a loading location for the container, characterised in that
- at least one first elongated table (4), which is movable between a first position away from the container (1) and a second position facing the container (1), is wheeled to the loading location, which table (4) comprises a support (7) which is movable in horizontal direction thereon, which support (7) is arranged for supporting objects (9) placed thereon,
- said table (4) is wheeled to the first position, in which objects (9) to be transported in the container (1) are placed on the support (7) and on the table (4),
- said table (4) is wheeled to the second position, in which the table (4) faces an opening in a short end of the container (1) with a short end thereof, and
- said support (7) is moved from a retracted position, in which the support (7) is positioned on the table (4), to an extended position, in which the support (7) has been moved off the table (4) and into the container (1).

## Description

The present invention relates to a method for loading and unloading an elongated container, which container is conveyed to a loading location for the container.

Such a method is generally known. In the known method, use is generally made of a "closed" container, i.e. a container in which a container space defined by said container is entirely bounded by walls of the container, and in which a door opening is present in a short end side of the container, via which the container can be loaded and unloaded. The known container is for example used for transporting parts of a greenhouse, such as aluminium sections, glass panes, columns, gutters and the like, to which end use is made of a container truck, for example.

A drawback of the known method is that loading and unloading the container is difficult, since the container must be loaded and unloaded via the relatively narrow door opening. Another drawback of the known method is the following. For economic reasons the container must be optimally loaded, to which end the objects to be transported are placed close together in the container. In particular in the case of a "closed" container, in which access to the container space is only possible via the door opening, this frequently leads to damage to the objects in practice.

The object of the invention is to improve the prior art, i.e. to propose an improved method for loading and unloading an elongated container, by means of which said loading and unloading can take place in an efficient manner without damaging the objects.

In order to accomplish that object, a method of the kind described in the introduction is according to the invention characterised in that:
- at least one first elongated table, which is movable between a first position away from the container and a second position facing the container, is wheeled to the loading location, which table comprises a support which is movable in horizontal direction thereon, which support is arranged for supporting objects placed thereon,
- said table is wheeled to the first position, in which objects to be transported in the container are placed on the support and on the table,
- said table is wheeled to the second position, in which the table faces an opening in a short end of the container with a short end thereof, and
- said support is moved from a retracted position, in which the support is positioned on the table, to an extended position, in which the support has been moved off the table and into the container.

The invention offers a significant advantage in that objects to be transported in the container are loaded onto the table outside the container, so that it is possible to reach the table from various directions for placing the objects thereon. The table can thus be optimally loaded with the objects, whereupon the support is moved off the table and into the container.

In a preferred embodiment of a method according to the invention, the support is moved from the retracted position to the extended position by hydraulic, pneumatic or electric means. Preferably, use is made of an engaging element detachably connected to the support for engaging the support for the purpose of moving said support from the retracted position to the extended position.

In another preferred embodiment of a method according to the invention, the support is placed on the table at least within the outer contours of the table. In this way objects are prevented from being placed on the support in such a manner that the fully loaded support will no longer fit in the container. More in particular, the objects to be transported in the container are placed on the support and on the table while taking into account a predetermined weight distribution of the objects in the container and/or taking into account a predetermined filling of the objects in the container. The aforesaid weight distribution will play a part, for example, when the loaded container is subsequently loaded onto a container truck and transported.

In another preferred embodiment of a method according to the invention, a loading floor of the container is positioned at substantially the same level as an underside of the support. In other words, if the level of the table corresponds to the level of the loading floor, the support can be easily moved from the table into the container. To realise an optimum loading of the container, a length and a width of the container space defined by the container at least substantially correspond to a length and a width of the table.

The invention also relates to a method according to the invention, in which
- the container is conveyed to an unloading location for the container,
- the table is wheeled to the second position, in which the short end of the table faces the opening in the short end of the container, and
- the support is moved from the extended position, in which the support has been moved off the table and into the container, to the retracted position, in which the support is positioned on the table, and
- the table is wheeled to the first position, in which the objects transported in the container are removed from the support and from the table.

The invention also relates to a table apparently suitable for use in a method according to the invention.

The invention will now be explained in more detail with reference to figures illustrated in a drawing, in which
- Figure 1 is a schematic, perspective view of a loading and unloading location of a container according to a preferred variant of the invention; and
- Figure 2 is a detail view of figure 1.

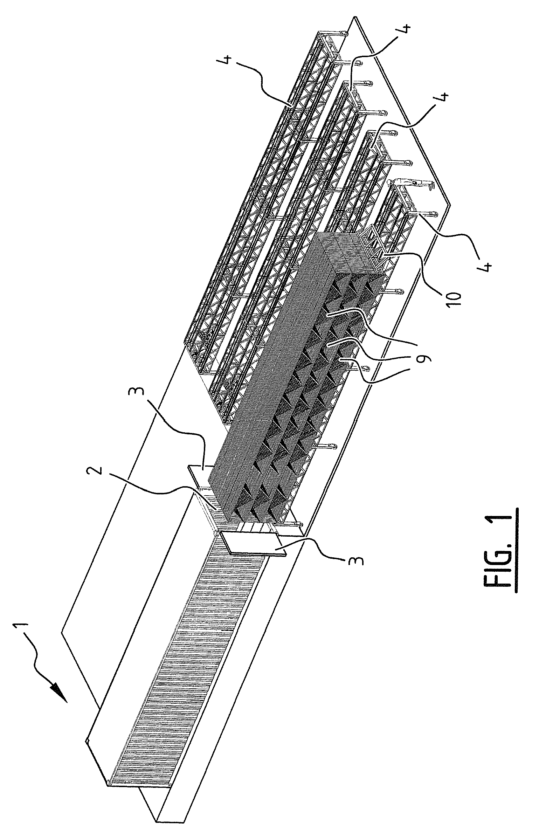

Figure 1 shows a loading and unloading location of elongated containers 1 of the standard type, i.e. containers which are conveyed by road from a loading location to an unloading location and/or vice versa by means of a container truck. As shown, the containers 1, only one of which is shown for convenience's sake, are of the "closed" type, in the sense that the container 1 can be loaded and unloaded only via an opening 2 as formed by doors 3 that swing outwards. Figure 1 furthermore shows four elongated tables 4, only one of which is shown for convenience's sake, for use in loading the container.

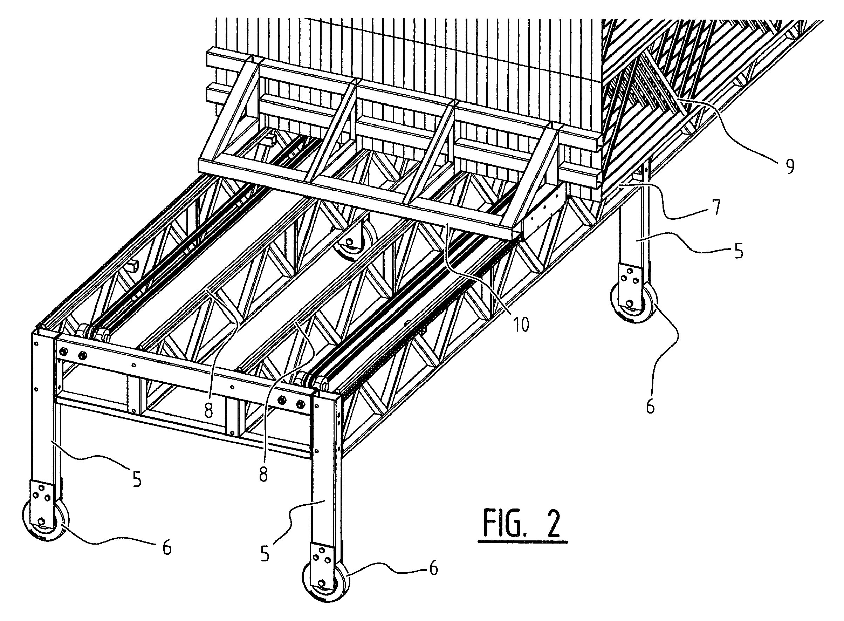

As figure 2 shows, each table 4 has several legs 5 provided with castors 6 at the ends thereof, so that moving the tables 4 will be easy. Each table 4 further comprises a support 7 present thereon, for example in the form of a top, which is movable in horizontal direction with respect to the table 4 via sliding guides 8.

With reference now to figures 1 and 2, the loading of the container 1 takes place as follows. In the first place, the table 4 is wheeled to a position in which it can be easily loaded from all sides with objects 9 to be transported in the container 1. The support 7 is in its retracted position in that situation, in which position the support 7 is present on the table 4 and the objects 9 are in fact supported by the support 7. Once the loading of the table 4 is complete, the table 4 is wheeled to a next position (figure 1), in which the table 4 faces the opening 2 of the container 1 with a short end thereof. Subsequently, the support 7 with the objects 9 present thereon is moved from the aforesaid retracted position, in which the support 7 carrying the objects 9 is positioned on the table, to an extended position, in which the support 7 carrying the objects 9 has been moved off the table 4 and into the container 1. The container 1 is to that end likewise fitted with sliding guides 8, whilst the support 7 is moved in to the container 1 by hydraulic means. The support 7 is provided with an engaging element 10 detachably connected thereto, which is engaged by the hydraulic means.

It is noted that the length and the width of the container space defined by the container 1 are substantially identical to the length and the width of the table 4, so that the container space can be optimally loaded. It is important in that regard that the dimensions of the support 7 be selected so that the support 7, when retracted, will be positioned just within the footprint of the table 4 and can thus be easily moved into the container 1.

The invention is not limited to the embodiments as shown, but it also extends to other preferred variants that fall within the scope of the appended claims. The skilled person will thus appreciate that the table 4 is not necessarily provided with castors 6, but that it may also roll on rails installed on the ground surface. It will furthermore be apparent to those skilled in the art that the unloading of the container 1 will take place in the reverse order of the loading of the container 1 as described in the foregoing.

## Claims

1. A method for loading and unloading an elongated container,
wherein
- the container is conveyed to a loading location for the container, **characterised in that**
- at least one first elongated table, which is movable between a first position away from the container and a second position facing the container, is wheeled to the loading location, which table comprises a support which is movable in horizontal direction thereon, which support is arranged for supporting objects placed thereon,
- said table is wheeled to the first position, in which objects to be transported in the container are placed on the support and on the table,
- said table is wheeled to the second position, in which the table faces an opening in a short end of the container with a short end thereof, and
- said support is moved from a retracted position, in which the support is positioned on the table, to an extended position, in which the support has been moved off the table and into the container.

2. A method according to claim 1, wherein the support is moved from the retracted position to the extended position by hydraulic, pneumatic or electric means.

3. A method according to claim 1 or 2, wherein the support comprises an engaging element detachably connected thereto for engaging the support for the purpose of moving said support from the retracted position to the extended position.

4. A method according to claim 1, 2 or 3, wherein the support is placed on the table at least within the outer contours of the table.

5. A method according to any one of the preceding claims 1-4, wherein the objects to be transported in the container are placed on the support and on the table while taking into account a predetermined weight distribution of the objects in the container.

6. A method according to any one of the preceding claims 1-5, wherein the objects to be transported in the container are placed on the support and on the table while taking into account a predetermined filling of the objects in the container.

7. A method according to any one of the preceding claims 1-6, wherein a loading floor of the container is positioned at substantially the same level as an underside of the support.

8. A method according to any one of the preceding claims 1-7, wherein a length and a width of the container space defined by the container at least substantially correspond to a length and a width of the table.

9. A method according to any one of the preceding claims 1-8,
wherein
- the container is conveyed to an unloading location for the container,
- the table is wheeled to the second position, in which the short end of the table faces the opening in the short end of the container, and
- the support is moved from the extended position, in which the support has been moved off the table and into the container, to the retracted position, in which the support is positioned on the table, and
- the table is wheeled to the first position, in which the objects transported in the container are removed from the support and from the table.

10. A table apparently suitable for use in a method according to any one of the preceding claims 1-9.
